# EUROPÄISCHE PATENTSCHRIFT

(11) **EP 1 173 691 B1**
(45) Veröffentlichungstag und Bekanntmachung des Hinweises auf die Patenterteilung: **13.10.2004**
(21) Anmeldenummer: 01917025.7
(22) Anmeldetag: 23.02.2001
(51) Int. Cl.: F16F 13/06, F16F 3/10

(54) **HYDROLAGER**
HYDRAULIC BEARING
PALIER HYDRAULIQUE

(30) Priorität: 23.02.2000 DE 10009544; 29.01.2001 DE 10104936
(43) Veröffentlichungstag der Anmeldung: 23.01.2002
(73) Patentinhaber: WOCO AVS GmbH, 63628 Bad Soden-Salmünster (DE)
(72) Erfinder: SCHLEINITZ, Uwe, 63628 Bad Soden-Salmünster (DE); KARUS, Eyk, 63628 Bad Soden-Salmünster (DE); NIX, Stefan, 63607 Wächtersbach (DE)
(74) Vertreter: Weber-Bruls, Dorothée, Dr.
(86) Internationale Anmeldenummer: PCT/EP2001/002113
(87) Internationale Veröffentlichungsnummer: WO 2001/063142

(56) Entgegenhaltungen:
- EP-A- 0 278 798
- DE-A- 4 139 048
- DE-A- 19 543 239
- DE-A- 19 544 126
- US-A- 4 399 987
- US-A- 5 060 917
- US-A- 5 860 638

## Beschreibung

Die Erfindung betrifft ein Hydrolager der im Oberbegriff des Patentanspruchs 1 genannten Art.

An hydraulisch gedämpfte Aggregatlager dieser Art werden Funktionsansprüche gestellt, die zum Teil einander widersprechende Ziele verfolgen und dementsprechend widersprüchliche Lösungen erfordern. So dienen solche Hydrolager primär der Anbindung eines Aggregats, insbesondere eines Kraftfahrzeugs, an die Karosserie. Sie müssen im statischen Ruhezustand des Aggregats die statische Last des Aggregats in z-Richtung, der zur Ebene der Querrichtung und der Längsrichtung des Kraftfahrzeugs senkrechten Richtung, aufnehmen. Dabei sollen zudem bei dynamischen Betriebsbedingungen die Relativbewegungen zwischen Aggregat und Karosserie, bezogen auf das Ausführungsbeispiel bei Einsatz des Hydrolagers in einem Kraftfahrzeug, möglichst begrenzt gehalten werden, was relativ hohe Federsteifigkeiten in allen drei Raumrichtungen erfordert. Gleichzeitig soll ein solches Hydrolager jedoch auch die Motoranregungen isolieren, das heißt, diese Störschwingungen nicht vom Motor auf die Karosserie übertragen, was notwendigerweise möglichst geringe Federsteifigkeiten erfordert. Da die Tragfeder aber zudem bei gebräuchlichen Hydrolagern gleichzeitig die elastische Begrenzungswand der hydraulischen Arbeitskammer bildet, soll sie überdies eine möglichst große Pumpfläche für das hydraulische Dämpfungsfluid aufweisen und, um effektiv zu sein, eine möglichst große Volumensteifigkeit aufweisen.

Diese Zielkonflikte lassen sich in zwei komprimierten Konfliktpaaren zusammenfassen: Das Elastomerfedersystem eines Hydrolagers für den Kraftfahrzeugbau muss grosse axiale Lagerwege aufweisen, gleichzeitig aber auch grosse radiale Federwege tolerieren und zusätzlich Resonanzen und Störschwingungen isolieren, gleichzeitig aber eine grosse dynamische Dauerfestigkeit und Volumensteifigkeit aufweisen.

Aus dem Stand der Technik sind zahlreiche Versuche bekannt, Kompromisse zwischen diesen Zielkonflikten bei der Auslegung der Tragfeder eines Hydrolagers zu finden.

So ist beispielsweise aus der deutschen Offenlegungsschrift DE 195 43 239 A1 bekannt, die Tragfeder des Hydrolagers durch Aussparungen in der Feder so weit zu schwächen, dass einerseits Blähbereiche entstehen und die Feder zudem in ihrem Federverhalten so weit erweicht wird, dass sie den Anforderungen an eine Entkopplung der Motorschwingungen möglichst weitgehend entgegenkommt. Um dabei dennoch den Anforderungen hinsichtlich der statischen und dynamischen Auflast des Aggregats gerecht zu werden, ist in der hydraulischen Arbeitskammer des Hydrolagers zusätzlich eine tragende Stahlfeder angeordnet, die der ausreichenden Begrenzung der Relativbewegung zwischen Aggregat und Karosserie sowie der Aufnahme der statischen und dynamischen Last des auf einem solchen Lager gelagerten Aggregats dient. Ein solcher Kompromiss geht jedoch zu Lasten der Volumensteifigkeit der Tragfeder, die eine unabdingbare Voraussetzung für eine ausreichende Dämpfungsleistung des Lagers ist.

Der Kompromiss, den die Technik eingeht, ist bei diesem Stand der Technik in Form einer blähbaren Elastomermembran-Steuerfeder gefunden, die die Stahlfeder als fluidisch beaufschlagbare Steuerkammer in der hydraulischen Arbeitskammer umgibt. Der Preis, technisch ebenso wie kommerziell, den der Stand der Technik dafür in Kauf nehmen muss, ist eine komplette zusätzliche Steuerung für die Steuerfeder für die Kenndatenkorrektur hinsichtlich der in der Radialfeder integrierten Blähfeder sowie die hohe Ausfallrate der Lager durch Bruch der Stahlfeder unter der unvermeidbaren dynamischen Belastung.

Ausgehend von diesem Stand der Technik liegt der Erfindung das technische Problem zugrunde, ein Hydrolager zu schaffen, das konfigurativ einen besseren Ausgleich zwischen den in ihren Zielsetzungen einander zuwiderlaufenden Kenndatenfeldern ermöglicht.

Die Erfindung löst diese Aufgabe durch ein Hydrolager, das die im Anspruch 1 genannten Merkmale aufweist.

Der wesentliche Grundgedanke der Erfindung liegt dementsprechend darin, nicht nur die axiale Tragfeder und die Radialfeder des Hydrolagers konstruktiv zu trennen, sondern auch eine Trennung der Blähfeder und der Radialfeder vorzunehmen. Die Blähfeder und die Radialfeder sind nicht mehr wie im Stand der Technik in einem einzigen Elastomerteil ausgebildet, sondern in zwei voneinander völlig unabhängigen Elastomerkörpern realisiert. Die Blähfeder ist also nicht mehr durch Aussparungen in der Radialfeder angelegt, sondern in Form einer von der Radialfeder als zweites separates Federelement ausgebildeten eigenständigen Rollmembran als Blähmembran konfiguriert. Durch diese konsequente Trennung des bekannten Lagerkörpers in eine Blähfeder und eine separate Radialfeder können die an beide Federn gestellten Anforderungen hinsichtlich des Kennlinienfeldes völlig unabhängig voneinander optimiert werden. So können beispielsweise anisotrope Steifigkeitsverhältnisse der Radialfeder in Verbindung mit einer schraubenförmigen Tragfeder von Z zu X zu Y gleich 10 zu 1 zu 1 ebenso eingestellt werden, und zwar ohne die Dimensionierung des Hydrolagers insgesamt dabei ändern zu müssen, beispielsweise Z zu X zu Y von 1 zu 5 zu 5. Dies wird dadurch ermöglicht, dass selbst nach Trennung der Federfunktionen in eine Tragfeder und eine Radialfeder der verbleibende Elastomer-Lagerkörper in seiner Konfiguration und Dimensionierung in keiner Weise blähbar ausgebildet zu sein braucht. Vielmehr können beide Bauteile, also sowohl die Radialfeder als auch die separate Blähfeder, nach Maßgabe der von der einzelnen Anwendung angepassten Anforderung in verschiedenen Härten und in verschiedenen Qualitäten der Elastomerwerkstoffe ausgeführt werden. Auch andere Federqualitäten, wie beispielsweise die Temperaturbeständigkeit des Elastomers, können und brauchen dann nur dort verwirklicht werden, wo sie wirklich benötigt werden.

Um ein koordiniertes Zusammenwirken der drei Federelemente, nämlich der Tragfeder, der Radialfeder und der Blähfeder, zu gewährleisten, weisen sowohl die Radialfeder als auch die Blähfeder, die in Sicht auf das Hydrolager vom Auflageranschlussstück zum Widerlager, hinter der Radialfeder im Inneren des Hydrolagers als einzige und ausschließliche die hydraulische Arbeitskammer abschließende Membranwand ausgebildet ist, starre Koppelelemente auf, die die drei Federkomponenten kraftschlüssig oder formschlüssig, auch unter Reibschluss oder Passsitz, starr miteinander verbinden und koppeln. So weisen nach einer Ausgestaltung der Erfindung die Radialfeder und die Blähfeder in dem Federelastomer integrierte metallische Innenstücke auf, die zentralaxial und koaxial durch Formschluss, oder Kraftschluss, insbesondere Passsitz oder Reibsitz, fest und starr miteinander verbunden sind. Insbesondere durch nicht kreissymmetrische Konfigurationen der Sitzquerschnitte im Kopplungsbereich der beiden Innenstücke oder durch Nut-Feder-Eingriff kann dabei vorzugsweise eine stabile Verdrehsicherung zwischen den beiden Innenteilen der Radialfeder und der Blähfeder hergestellt werden. Auf diese Weise stützt sich dann der Innenteilverbund bestehend aus dem Innenteil der Blähfeder und dem Innenteil der Radialfeder auf dem anschlussseitigen Kopf der tragenden, insbesodere aus Stahl bestehenden Spiralfeder ab. Diese Tragfeder ist dann ihrerseits mittelbar oder unmittelbar auf dem Widerlageranschlussstück des Hydrolagers abgestützt. Der hier verwendete Begriff "mittelbar" bezeichnet dabei ein Abstützen auf Zwischenelementen des Hydrolagers, beispielsweise einer üblichen radialen Trennscheibe, die dann ihrerseits auf dem eigentlichen Widerlager oder Widerlageranschlussstück des Hydrolagers abgestützt ist.

Durch dieses Auflösen des ursprünglichen Lagerkörpers eines Hydrolagers, der als Pumpfläche und Blähfeder, gleichzeitig als Tragfeder und überdies ebenso gleichzeitig als Radialfeder dienen musste, wird ohne konstruktiv wesentlich größeren Aufwand zu erfordern und ohne aufwendige zusätzliche Steuermaßnahmen ein Hydrolager konstruierbar, das hinsichtlich seiner Federdatenanisotropie für jede der drei Hauptachsen ebenso wie für jede Resultierende völlig frei den Erfordernissen der Anwendung entsprechend einstellbar sind.

Durch diese neue konstruktive Freiheit der Hydrolagerkonfiguration, die auch eine vergleichsweise weiche Konfiguration der Radialfeder zumindest in vorbestimmten Vorzugsrichtungen ermöglicht, ist jedoch auch die als Tragfeder benutzte Schraubenfeder aus Federstahl gegebenenfalls durchaus größeren radialen Beanspruchungen ausgesetzt. Um in dieser Situation weder der Konfigurierbarkeit der Radialfeder aus Kompromissgründen Grenzen setzen zu müssen, noch für die Konfiguration und Dimensionierung der Tragfeder Restriktionen hinnehmen zu müssen, ist die Tragfeder nach einer weiteren Ausgestaltung der Erfindung in der Weise weiterhin nur mittelbar auf dem Widerlageranschlussstück des Hydrolagers abgestützt, dass sie auf einem als Schubfeder dienenden Elastomerpuffer oder einer Elastomerschubfeder axial aufsitzt. Sowohl eine Zentrierung der so aufsitzend abgestützten Tragfeder als auch bei entsprechender Konfiguration eine gedämpfte Anschlagfunktion der Schubfeder können durch einen zentralen Zapfen realisiert werden, der an der Schubfeder auflastseitig ausgebildet ist. Dieser Zentrierzapfen ist entsprechend der Innenkontur der als Tragfeder dienenden Schraubenfeder so ausgebildet, dass er bei aufsitzender Axialfeder zentrierend in diese hineinragt.

Eine weitere Stabilisierung des an der Schubfeder ausgebildeten Zentrierzapfens kann nach einer weiteren Ausgestaltung der Erfindung durch Einvulkanisieren eines zum Widerlager hin offenen becherförmigen und mit einem Außenflansch versehenen Formblechs erzielt werden.

Durch diese Ausgestaltung der Widerlagerseitigen Abstützung der aus Federstahl gefertigten tragenden Spiralfeder können in höchst effektiver Weise als Schubkraft auftretende Querkräfte kompensiert werden, die bei starrer Widerlagerung des Tragfederfußes bekanntermaßen leicht zum Federbruch von allen Arten von Schraubenfedern führen können. Es sei daher an dieser Stelle darauf hingewiesen, dass die hier als Ausgestaltung der Erfindung offenbarte Tragfederlagerung durchaus auch unabhängig vom vorliegenden Fall der Anwendung im Hydrolager Anwendung finden kann.

Weitere Ausgestaltungen der Erfindung sind Gegenstand der Unteransprüche.

Die Erfindung ist im Folgenden anhand eines Ausführungsbeispiels in Verbindung mit den Zeichnungen näher erläutert. Es zeigen:

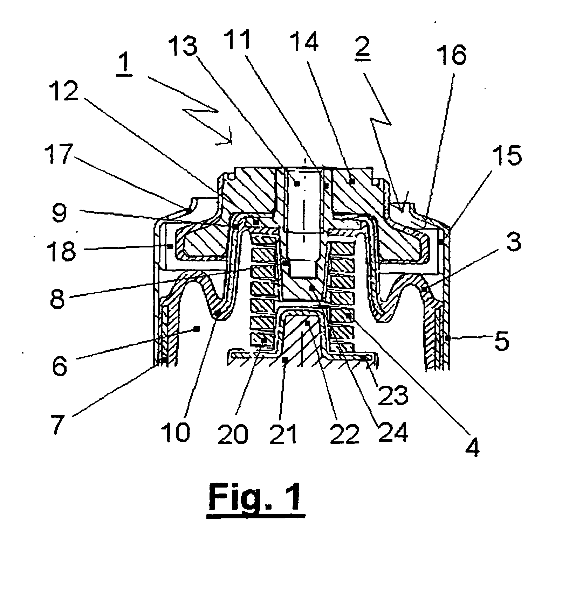

- Figur 1: im Axialschnitt und in Teildarstellung den auflagerseitigen Kopf eines Hydrolagers mit den Merkmalen der Erfindung;
- Figur: 2das in Figur 1 gezeigte Hydrolager, ebenfalls im Axialschnitt, jedoch um einen Winkel von 90° im Uhrzeigersinn um die Zentralachse des Lagers gedreht.

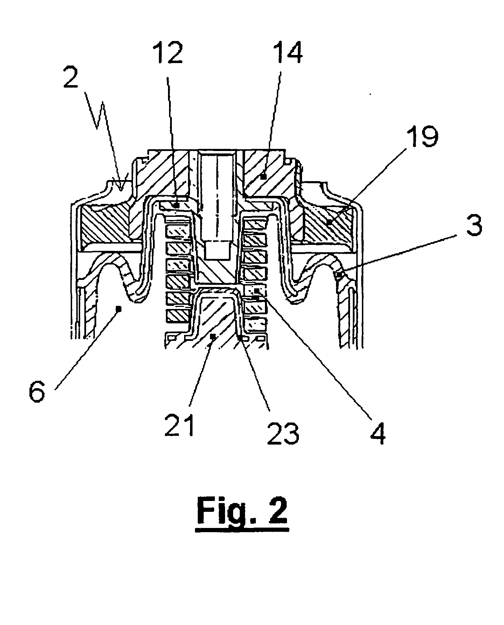

In der Figur 1 ist der auflagerseitige Kopfabschnitt eines ansonsten landläufig ausgebildeten und durch hydraulische Drosselung gedämpften Hydrolagers im Axialschnitt gezeigt. In der Figur 2 ist das in Figur 1 gezeigte Ausführungsbeispiel, um die Längsachse des Lagers um 90° im Uhrzeigersinn gedreht, gezeigt. Diesen Darstellungen sind sämtliche Merkmale der Erfindung in der Verwirklichung des Ausführungsbeispiels entnehmbar. Es erübrigt sich daher, auf die zum landläufigen Stand der Technik gehörenden widerlagerseitigen Elemente des hydraulisch gedämpften Traglagers näher einzugehen oder diese in den Figuren darzustellen.

Das als Ausführungsbeispiel der Erfindung in den Figuren gezeigte Hydrolager ist zu Lagerung eines Kraftfahrzeugaggregats bestimmt und besteht aus einem Auflageranschluss 1, einem in den Figuren nicht dargestellten, axial gegenüberliegenden üblichen Widerlageranschluss, einem zwischen diesen beiden Anschlüssen angeordneten scheibenförmigen Elastomerfeder als Radialfeder 2 und einer als Rollmembran ausgebildeten Elastomermembranfeder als Blähfeder 3 sowie einer Schraubenfeder aus Federstahl als Tragfeder 4.

Dieses Federsystem des Hydrolagers ist von einem zylindrischen und zylindrisch gekröpften Lagergehäuse aus Stahl umschlossen. Die Blähfeder 3 begrenzt auflagerseitig als elastisch verformbare pumpende Wand eine hydraulische Arbeitskammer 6, die widerlagerseitig nach landläufiger Technik mit einer Trennscheibe abgeschlossen ist, in der sich ein Drosselkanal befindet, der sich einerseits in die hydraulische Arbeitskammer 6 öffnet, andererseits in eine übliche Ausgleichskammer mündet, die unter der widerlagerseitigen Fläche der Trennscheibe nach landläufiger Art ausgebildet ist.

Die Blähfeder 3 ist eine Rollmembran mit definierter Pumpfläche und einer den Dämpfungsanforderungen entsprechend ausgelegten Membrankontur. Das Pumpvolumen der hydraulischen Flüssigkeit sowie die Volumensteifigkeit der Dämpfung können durch eine Werkstoffeinstellung und/oder entsprechendes Konfigurieren an dieser Rollmembran ohne jede Rücksicht auf andere erforderliche Federdaten des Hydrolagers eingestellt und konstruktiv festgelegt werden.

Die Blähfeder 3 ist einerseits über einen einvulkanisierten Lagerring 7 an der Innenwandfläche des Lagergehäuses 5 fixiert, und ist auflagerseitig mit einem Kernteil8 aus einem starren Werkstoff, vorzugsweise Metall, versehen, an den eine glockenförmige Schürze 9, vorzugsweise ebenfalls aus Metall, angeformt oder an dem diese als separat ausgebildetes Teil abgestützt ist. Diese Schürze 9 dient der konfigurativen Versteifung der Rollmembran 3, speziell der Präformierung der Rollfalte 10 zwischen Lagerring 7 und dem Kernteil 8.

Insgesamt ist durch die Konfiguration der Blähfeder 3 als Rollmembran die Federsteifigkeit der Blähfeder 3 in allen drei Raumrichtungen außerordentlich gering und verursacht keine oder nur praktisch zu vernachlässigende Federanteile, genauer gesagt verfälschende Federanteile, die die dreidimensional eingestellten Lagersteifigkeiten des Hydrolagers beeinflussen könnten. Andererseits ist die so ausgelegte Blähfeder 3 ohne erforderliche Kompromisse in Verbindung mit der jeweils erforderlichen Lagersteifigkeit auf eine optimale hochfrequente Tilgerwirkung abstellbar, wobei eine große Pumpfläche konfiguriert werden kann, so dass der Pumpentilger des Hydrolagers gleichzeitig große axiale und radiale Federwege der Radialfeder und der Tragfeder aufnehmen kann, ohne dass dadurch das hochfrequente Dämpfungsverhalten und Tilgerverhalten des Lager beeinflusst werden.

Das Kernstück 8 der Blähfeder 3 ist in dem hier gezeigten Ausführungsbeispiel als zumindest im Wesentlichen axial ausgerichtetes zylindrisches Bauteil11 mit einem axial ungefähr mittig angeordneten Außenflanschring 12 ausgebildet. Das Kernteil 8 ist anschlussseitig offen mit einer zentralen Bohrung 13 und mit einem Innengewinde versehen und dient dem Schraubanschluss des zu lagernden Aggregats. Über den Flanschring 12 ist das Kernteil 8 in die Rollmembran einvulkanisiert oder an diese anvulkanisiert oder mit dieser verklebt. Die Schürze 9 ist in dem hier gezeigten Ausführungsbeispiel von der Auflagerseite her auf den Flansch 12 des Kernteils 8 aufgelegt, so dass die Schürze 9 in ihrer Glockenform auf dem Flansch 12 des Kernteils 8 hängend gehaltert ist. Mit seiner widerlagerseitigen, mit dem Elastomer der Rollmembran beschichteten Oberfläche des Flanschrings 12 liegt das Kernteil 8 der Rollmembran 3 auf dem auflagerseitigen Kopf der Tragfeder 4 auf. Auf diese Weise wird die axial tragend in das Hydrolager eingeleitete Kraft über das als Anschlussteil und Übertragungsteil dienende Kernteil 8 der Rollmembran 3 geleitet und dient somit auch der Einleitung axialer Kräfte in das Hydrolager, und auf die Tragfeder 4.

Mit seinem auflagerseitig des Flanschringes 12 liegenden Hülsenabschnitt 11 greift das Innenteil oder Kernteilstück 8 der Rollmembran 3 in eine komplementär ausgebildete Innenbohrung des Innenteils oder Anschlussstücks 14 der Radialfeder 2 ein. Dieser Eingriff ist so ausgebildet, so dass die beiden Kernteile 8,14 starr miteinander verbunden sind. Im Einzelnen kann der Schluss sowohl als Kraftschluss oder auch als Formschluss oder auch in der Weise als kombinierter Kraftschluss und Formschluss ausgebildet sein, dass zusätzlich zu einem Presssitz eine Verzahnung oder ein Nut-Feder-Eingriff ausgebildet sind, um unter allen Umständen eine Verdrehsicherung der beiden Kernteile gegeneinander zu gewährleisten.

Das Kernteil 14 der Radialfeder 2 des Anschlussstücks 1 ist von einem Außenring 15, insbesondere aus Stahl, umgeben. Eine scheibenförmige Elastomerfeder 16 ist, erforderlichenfalls unter mäßiger radialer Vorspannung, zwischen dem Kernteil 14 und dem Außenring 15, beide Teile verbindend, eingefügt. Die gesamte Radialfeder 2 ist in die Lagerhülse 5 kraftschlüssig eingepresst. Eine Einrollung 17 des oberen Gehäuserandes 5 dient als zusätzlich sichernder Zuganschlag.

Die Federdaten der Radialfeder 2 in beliebigen einzustellenden radialen Vektorrichtungen lassen sich in der Radialfeder am einfachsten durch das Ausschneiden von Segmenten 18 in der scheibenförmigen Matrix 19 des Elastomerkörpers 16 der Radialfeder 2 verwirklichen. Selbstverständlich können solche axialen Anisotropien der Radialfeder 2 in unterschiedlichen radialen Vektorrichtungen auch durch andere Mittel als durch Aussparungen verwirklicht werden, so beispielsweise durch eine Herstellung der Elastomerfeder 16 als Mehrkomponentenfeder.

Die Tragfeder des Hydrolagers, auf der das Kernteil 8 der Blähfeder 3 lasteinleitend aufliegt und in die das Kernteil zentrierend hineinragt, ist mit ihrem widerlagerseitigen Fuss 20 auf einem vergleichsweise querweichen Elastomerpuffer 21 gelagert und elastisch abgestützt. Auf dem Elastomerpuffer21 ist zentral und auflagerseitig ein Dom angeformt, der für die Tragfeder sowohl als Zentrierzapfen 22 und zugleich auch zu deren Querkraftanbindung oder Schubkraftanbindung dient. Dieser Zentrierzapfen ist vorzugsweise schwach konisch, sich zum Auflager hin verjüngend konfiguriert.

Im auflagerseitigen Kopfbereich des Elastomerpuffers 21 ist ein der gesamten dreidimensionalen Oberflächenkontur des Elastomerpuffers folgend konfiguriertes Formblech 23 einvulkanisiert, und zwar vorzugsweise in der in den Figuren erkennbaren Weise unmittelbar unter der Oberfläche des Elastomerpuffers. Im Detail ist die Oberflächengummierung des Formblechs so dünn wie möglich dimensioniert, dabei jedoch so dick wie nötig, um die Tragfeder dauerhaft verschleissfest dämpfend lagern zu können.

In der den Figuren ebenfalls entnehmbaren Weise sind die axialen Erstreckungen des Zentrierzapfens 22 der Schubfeder 21 in Richtung Auflager und des Zentrierzapfens 24 des Kernteils 8 der Blähfeder 3 so bemessen, dass die beiden einander gegenüberliegenden Stirnseiten dieser Zentrierzapfen als Anschlag zum Auffangen von übergrossen auf das Hydrolager einwirkenden axialen Durchschlagkräften dienen können. Der sich unter betriebsgerechter statischer Auflast zwischen den beiden Zapfenstirnseiten einstellende Abstand entspricht also dem konstruktiv vorgegebenen maximalen Operationsfreiweg des Hydrolagers, an den sich gegebenenfalls lediglich der Einsinkweg des Schubfederpuffers 21 anschliesst.

## Patentansprüche

1. Hydrolager, insbesondere für die Lagerung von Kraftfahrzeugaggregaten, bestehend aus einem Auflageranschluss, einem axial gegenüberliegenden Widerlageranschluss, einem zwischen diesen angeordneten Lagerfederelement aus einer als Radialfeder (2) und als Blähfeder (3) dienenden Elastomerfeder und einer als tragende Druckaxialfeder dienenden, axial in einer hydraulischen Arbeitskammer (6) stehenden Schraubenfeder, aus einem dieses Lagerfederelement radial umschliessenden und auf dem Widerlageranschluss abgestützten Lagergehäuse (5) sowie aus einem aus Arbeitskammer (6), Drosselkanal und Ausgleichskammer bestehenden hydraulischen Dämpfersystem zwischen dem Auflageranschluss und dem Widerlageranschluss,
**gekennzeichnet durch**
zwei als separate Elastomerformteile ausgebildete Federsysteme (2, 3), nämlich die Radialfeder (2) und die Blähfeder (3), die über Koppelstücke (8, 14) **durch** Kraftschluss oder Formschluss starr miteinander verbunden auflagerseitig an die Schraubenfeder angeschlossen sind, auf der die die hydraulische Arbeitskammer (6) druckfest und fluiddicht auflagerseitig abschliessende glockenartig als Rollmembran ausgebildete Blähfeder (3) aufliegend eingespannt ist.

2. Hydrolager nach Anspruch 1,
**gekennzeichnet durch**
eine Radialfeder (2) in Form einer scheibenförmigen Elastomerfeder (16), deren Aussenrand mittelbar (15) oder unmittelbar an der Innenwand des Lagergehäuses (5) axial fixiert eingespannt ist, und in deren Zentrum ein Metallblock eingebunden ist, der, zumindest teilweise, sowohl als Auflageranschlussstück (1) als auch als Koppelstück (14) für das Radialfedersystem dient.

3. Hydrolager nach Anspruch 1 oder 2,
**gekennzeichnet durch**
eine scheibenförmige Elastomerfeder (16) als Federkörper der Radialfeder (2), die lediglich über stegartige Radialbrücken (19) radial vorgespannt mittelbar oder unmittelbar im Lagergehäuse (5) eingespannt ist.

4. Hydrolager nach einem der Ansprüche 1 bis 3,
**gekennzeichnet durch**
Zylinderringe (7; 15), die jeweils zumindest eines der Teilfedersysteme (2; 3) des Lagerfedersystems (2, 3,4) peripher aussen umschliessen oder im peripheren Aussenbereich eines Elastomerkörpers (19, 3) eines der Teilfedersysteme (2; 3) einvulkanisiert und so dimensioniert sind, dass das jeweilige Teilfedersystem zur Herstellung einer Presspassung in eine Lagergehäusehülse (5) als vorgefertigtes Bauteil einpressbar ist.

5. Hydrolager nach einem der Ansprüche 1 bis 4,
**gekennzeichnet durch**
eine axiale Zapfen-Buchse-Presspassung zwischen den Koppelteilen (8, 14) der Elastomerfedersysteme (2, 3).

6. Hydrolager nach Anspruch 5,
**gekennzeichnet durch**
eine in der axialen Zapfen-Buchse-Presspassung zwischen den Koppelteilen (8, 14) konfigurierte Verdrehsicherung.

7. Hydrolager nach einem der Ansprüche 1 bis 6,
**gekennzeichnet durch**
eine Schraubenfeder aus Stahl als Tragfeder (4) des Lagerfedersystems.

8. Hydrolager nach einem der Ansprüche 1 bis 7,
**gekennzeichnet durch**
eine als Koppelteil (8) mit der Tragfeder (4) verbundene Metallhülse (11), die über einen angeformten Flanschring (12) axial zwischen der Druckfeder und dem Koppelteil (14) der Radialfeder (2) eingespannt und mit einer sich anschlussseitig öffnenden Innengewindebohrung (13) für den Anschluss der Auflast ausgestattet ist.

9. Hydrolager nach Anspruch 8,
**gekennzeichnet durch**
eine Einbindung des Flanschringes (12) des Koppelteils (8) in einer innenflanschartigen komplementären Ausnehmung in einer glockenförmigen Schürze (9) der Blähmembran (3).

10. Hydrolager nach einem der Ansprüche 1 bis 9,
**gekennzeichnet durch**
eine als querweicher Elastomerpuffer ausgebildete Schubfeder (21) als Widerlager für die als Schraubenfeder ausgebildete Tragfeder (4).

11. Hydrolager nach Anspruch 10,
**gekennzeichnet durch**
ein im auflagerseitigen Kopfbereich der Schubfeder (21) einvulkanisiertes und der gesamten dreidimensionalen Oberflächenkontur der Schubfeder (21) folgend konfiguriertes Formblech.

## Claims

1. A hydro-bearing, more particularly for mounting motor vehicle units, consisting of a support connection, an axially opposite abutment connection, a bearing spring element disposed between these and consisting of an elastomeric spring serving as a radial spring (2) and as an inflatable spring (3), and of a coil spring serving as a load-bearing axial compression spring and disposed axially in a hydraulic working chamber (6), of a bearing housing (5) radially enclosing the said bearing spring element and supported on the abutment connection, and of a hydraulic shock-absorber system between the support connection and the abutment connection, the hydraulic shock absorber system consisting of a working chamber (6), throttle duct and compensating chamber, **characterised by** two spring systems (2, 3) constructed as separate elastomeric mouldings, namely the radial spring (2) and the inflatable spring (3), which are connected to the coil spring on the support side, being rigidly interconnected by a positive or non-positive connection by means of coupling members (8, 14), on which coil spring the inflatable spring (3) is clamped to rest thereon, said inflatable spring (3) being constructed in the form of a bell as a rolled diaphragm and sealing off the hydraulic working chamber (6) on the support side so as to be pressure-tight and fluid-tight.

2. A hydro-bearing according to claim 1, **characterised by** a radial spring (2) in the form of a disc-shaped elastomeric spring (16), the outer edge of which is clamped so as to be axially fixed indirectly (15) or directly on the inner wall of the bearing housing (5), and in the centre of which there is incorporated a metal block which, at least partially, serves both as support connection member (1) and as a coupling member (14) for the radial spring system.

3. A hydro-bearing according to claim 1 or 2, **characterised by** a disc-shaped elastomeric spring (16) as spring body of the radial spring (2), which is clamped indirectly or directly in the bearing housing (5) with radial prestressing solely by way of web-like radial bridges (19).

4. A hydro-bearing according to any one of claims 1 to 3, **characterised by** cylinder rings (7; 15) which peripherally externally enclose in each case at least one of the partial spring systems (2; 3) of the bearing spring system (2, 3, 4) or are vulcanised in the peripheral outer zone of an elastomer body (19, 3) of one of the partial spring systems (2; 3) and are so dimensioned that the respective partial spring system can be pressed into a bearing housing sleeve (5) as a prefabricated component in order to make a press fit.

5. A hydro-bearing according to any one of claims 1 to 4, **characterised by** an axial pin and bush press fit between the coupling parts (8, 14) of the elastomeric spring systems (2, 3).

6. A hydro-bearing according to claim 5, **characterised by** an anti-rotation means configured in the axial in the pin and bush press fit between the coupling parts (8, 14).

7. A hydro-bearing according to any one of claims 1 to 6, **characterised by** a coil spring of steel as carrier spring (4) of the bearing spring system.

8. A hydro-bearing according to any one of claims 1 to 7, **characterised by** a metal sleeve (11) which is connected as coupling part (8) to the carrier spring (4) and which is clamped by an integrally formed flange ring (12) axially between the compression spring and the coupling part (14) of the radial spring (2) and is equipped with an inner screwthreaded bore (13) opening on the connection side for the connection of the load.

9. A hydro-bearing according to claim 8, **characterised by** incorporation of the flange ring (12) of the coupling part (8) in a complementary recess in the form of an inner flange in a bell-shaped apron (9) of the inflatable diaphragm (3).

10. A hydro-bearing according to any one of claims 1 to 9, **characterised by** a thrust spring (21) constructed as a transversely soft elastomeric buffer as an abutment for the carrier spring (4) which is constructed as a coil spring.

11. A hydro-bearing according to claim 10, **characterised by** a shaped sheet-metal plate vulcanised in the head zone of the thrust spring (21) on the support side and configured to follow the entire three-dimensional surface contour of the thrust spring (21).

## Revendications

1. Palier hydraulique, en particulier pour le montage en palier de groupes pour véhicules automobiles, formé d'un raccordement de support de pose, d'un raccordement de contre-palier axialement opposé, d'un élément de ressort pour palier disposé entre ceux-ci, formé d'un ressort en élastomère servant de ressort radial (2) et de ressort à gonflement (3), et d'un ressort hélicoïdal servant de ressort axial de compression à effet porteur, placé axialement dans une chambre de travail (6) hydraulique, d'un boîtier de palier (5), entourant radialement cet élément de ressort pour palier et prenant appui sur le raccordement de contre-palier, ainsi que d'un système d'amortisseur hydraulique, formé de la chambre de travail (6), d'un canal d'étranglement et d'une chambre de compensation, entre le raccordement de support de pose et le raccordement de contre-palier,
**caractérisé par** deux systèmes de ressort (2, 3), réalisés sous la forme de pièces formées en élastomère, séparées, précisément le ressort radial (2) et le ressort à gonflement (3), qui sont reliés ensemble rigidement par l'intermédiaire d'une liaison à interaction de forces ou une liaison à ajustement de forme par des pièces de couplage (8, 14), ressort hélicoïdal sur lequel est enserré avec effet de pose le ressort à gonflement (3) réalisé sous la forme de cloche en membrane à déroulement, fermant de façon étanche à la pression et étanche aux fluides, du côté du support de pose, la chambre de travail hydraulique (6).

2. Palier hydraulique selon la revendication 1, **caractérisé par** un ressort radial (2) ayant la forme d'un ressort en élastomère (16) discoïde, dont le bord extérieur (15) est enserré de façon fixe axialement, indirectement (15) ou directement, sur la paroi intérieure du boîtier de palier (5), et au centre duquel est incorporé un bloc métallique servant, au moins partiellement, tant de pièce de raccordement de support de pose (1) qu'également de pièce de couplage (14) pour le système à ressort radial.

3. Palier hydraulique selon la revendication 1 ou 2, **caractérisé par** un ressort en élastomère (16, 10) discoïde, sous forme de corps de ressort du ressort radial (2), qui est incorporé de façon précontrainte radialement, indirectement ou directement dans le palier de boîtier (5), uniquement par des ponts radiaux (19) du genre de nervure.

4. Palier hydraulique selon l'une des revendications 1 à 3, **caractérisé par** des bagues cylindriques (7 ; 15), qui chacun entourent périphériquement et extérieurement au moins l'un des systèmes à ressort partiel (2 ; 3) du système à ressort de palier (2, 3, 4), ou sont intégrés par vulcanisation dans une zone extérieure périphérique d'un corps en élastomère (19, 3) d'un des systèmes à ressort partiel (2 ; 3) et sont dimensionnés de manière que le système à ressort partiel respectif puisse être enfoncé en tant que composant préfabriqué, pour établir un ajustement pressé, dans une douille de boîtier de palier (5).

5. Palier hydraulique selon la revendication 1 à 4, **caractérisé par** un ajustement pressé axial tourillon-douille entre les parties de couplage (8, 14) des systèmes à ressort en élastomère (2, 3).

6. Palier hydraulique selon la revendication 5, **caractérisé par** une sécurité de blocage de rotation configurée dans l'ajustement pressé tourillon-douille axial, entre les parties de couplage (8, 14).

7. Palier hydraulique selon l'une des revendications 1 à 6, **caractérisé par** un ressort hélicoïdal en acier, faisant office de ressort porteur (4) du système de ressort de palier.

8. Palier hydraulique selon l'une des revendications 1 à 7, **caractérisé par** une douille métallique (11), reliée en tant que partie de tête (8) au ressort support (4), douille métallique enserrée, par l'intermédiaire d'une bague de bride (12) formée d'un seul tenant, axialement entre le ressort de compression et la partie de couplage (14) du ressort radial (2) et munie d'un perçage taraudé (13), débouchant côté raccordement, pour le raccordement de la charge appliquée.

9. Palier hydraulique selon la revendication 8, **caractérisé par** une incorporation de la bague de bride (12) de la partie de couplage (8) dans un évidement complémentaire du genre d'une bride intérieure, ménagé dans un tablier (9) en forme de cloche de la membrane gonflante (3).

10. Palier hydraulique selon l'une des revendications 1 à 9, **caractérisé par** un ressort de poussée (21), réalisé sous la forme de tampons en élastomère à souplesse transversale, faisant office de contre-palier pour le ressort support (4) réalisé sous la forme de ressort hélicoïdal.

11. Palier hydraulique selon la revendication 10, **caractérisé par** une tôle de forme, intégrée par vulcanisation dans la zone de tête, côté support de pose, du ressort de poussée (21) et configurée de façon à suivre le contour de surface globale tridimensionnelle dû ressort de poussée (21).
